# EUROPEAN PATENT APPLICATION

(11) **EP 4 629 093 A2**
(43) Date of publication of application: **08.10.2025**
(21) Application number: 25184054.2
(22) Date of filing: 19.06.2025
(51) Int. Cl.: G06F 15/173

(54) **RDMA DATA TRANSMISSION METHOD, NETWORK DEVICE, SYSTEM, AND ELECTRONIC DEVICE**

(30) Priority: 20.03.2025 CN 202510338839
(71) Applicant: Beijing Baidu Netcom Science Technology Co., Ltd., Beijing 100085 (CN)
(72) Inventor: CAO, Ying, Beijing, 100085 (CN); GONG, Xiaozhang, Beijing, 100085 (CN); LI, Zhaogeng, Beijing, 100085 (CN); QIAN, Yuanpan, Beijing, 100085 (CN)
(74) Representative: Gill Jennings & Every LLP

(57) **Abstract**

An RDMA data transmission method, a network device and a network system is provided. An implementation of the method is applied to a network device comprising an xPU and an RNIC, the xPU comprises a first engine, and the RNIC comprises a second engine in communication with the first engine, a WQE Buffer, and an RDMA engine in communication with the second engine. The method comprises: assembling, by the first engine, a WE based on a hardware offload asynchronous copy instruction set, and transmitting the WE to the second engine; storing, by the second engine, the WE into the WQE Buffer and transmitting the WE to the RDMA engine; performing, by the RDMA engine, data processing based on the WE, the data processing comprising data transmitting, memory accessing and queue managing; and receiving, by the first engine, a feedback of the data processing transmitted via the second engine.

## Description

### TECHNICAL FIELD

The present disclosure relates to the field of communication technology, particularly to the fields of technologies such as chip processors, computing power clusters, collective communication operations and large models, and more particularly to an RDMA data transmission method, network device, system, an electronic device, a computer readable storage medium and a computer program product.

### BACKGROUND

In a generative large language model, an MoE (Mixture of Experts) model can process different tasks through many "expert" networks. In a scenario of the MoE, there is a requirement on the transmission of a large number of scattered small data blocks.

An RDMA (Remote Direct Memory Access) protocol is a network protocol that allows computers to directly access a remote computer memory, and is commonly used in scenarios such as a high-performance computing (HPC) scenario, a data center, and a storage network.

### SUMMARY

Implementations of the present disclosure provides an RDMA data transmission method, network device, system, electronic device, a computer-readable storage medium and a computer program product.

In a first aspect, implementations of the present disclosure provide an remote direct memory access, RDMA, data transmission method, applied to a network device comprising a processor and an RDMA network interface controller, RNIC, where the processor comprises a first engine, the RNIC comprises a second engine in communication with the first engine, a work queue element, WQE, buffer, and an RDMA engine in communication with the second engine, and the method comprises: assembling, by the first engine, a work element, WE, based on a hardware offload asynchronous copy instruction set, and transmitting the WE to the second engine; storing, by the second engine, the WE into the WQE Buffer and transmitting the WE to the RDMA engine; performing, by the RDMA engine, data processing based on the WE, the data processing comprising data transmitting, memory accessing and queue managing; and receiving, by the first engine, a feedback of the data processing transmitted via the second engine.

In a second aspect, implementations of the present disclosure provide an remote direct memory access, RDMA, data transmission method, applied to a network system comprising a plurality of network devices, where each network device comprises a processor and an RDMA network interface controller, RNIC, the processor comprises a first engine, the RNIC comprises a second engine in communication with the first engine, a work queue element, WQE, buffer, and an RDMA engine in communication with the second engine, and the method comprises: assembling, by a first engine of a first network device, a work element, WE, based on a hardware offload asynchronous copy instruction set, and transmitting the WE to a second engine of the first network device; storing, by the second engine of the first network device, the WE into the WQE Buffer and transmitting the WE to an RDMA engine of the first network device; initiating, by the RDMA engine of the first network device, a request to a second network device based on the WE; and completing, by the second network device, the request and giving a feedback to the first engine of the first network device, where the first network device and the second network device are different network devices in the plurality of network devices.

In a third aspect, implementations of the present disclosure provide an remote direct memory access, RDMA, data transmission network device, the network device comprises: a processor, comprising a first engine; and an RDMA network interface controller, RNIC, comprising a second engine in communication with the first engine, a work queue element, WQE, buffer, and an RDMA engine in communication with the second engine, where the first engine is configured to assemble a work element, WE, based on a hardware offload asynchronous copy instruction set, and transmit the WE to the second engine; the second engine is configured to store the WE into the WQE Buffer and transmit the WE to the RDMA engine; and the RDMA engine is configured to perform data processing based on the WE and transmit a feedback of the data processing to the first engine via the second engine, the data processing comprising data transmitting, memory accessing and queue managing.

In a fourth aspect, implementations of the present disclosure provides an remote direct memory access, RDMA, data transmission network system, comprising a plurality of network devices, where each network device comprises a processor and an RDMA network interface controller, RNIC, the processor comprises a first engine, the RNIC comprises a second engine in communication with the first engine, a work queue element, WQE, buffer, and an RDMA engine in communication with the second engine, where a first engine of a first network device is configured to assemble a work element, WE, based on a hardware offload asynchronous copy instruction set, and transmit the WE to a second engine of the first network device; the second engine of the first network device is configured to store the WE into the WQE Buffer and transmit the WE to an RDMA engine of the first network device; the RDMA engine of the first network device is configured to initiate a request to a second network device based on the WE; and the second network device is configured to complete the request and give a feedback to the first engine of the first network device, where the first network device and the second network device are different network devices in the plurality of network devices.

In a fifth aspect, implementations of the present disclosure provides an electronic device, the electronic device comprises: at least one processor; and a memory, in communication with the at least one processor, where the memory stores instructions executable by the at least one processor, and the instructions are executed by the at least one processor, to enable the at least one processor to perform the RDMA data transmission method according to the first aspect and the second aspect.

In a sixth aspect, implementations of the present disclosure provide a non-transitory computer readable storage medium, storing a computer instruction, where the computer instruction is used to cause a computer to perform the RDMA data transmission method according to the first aspect and the second aspect.

In a seventh aspect, implementations of the present disclosure provide a computer program product, comprising a computer program, where the computer program, when executed by a processor, implements steps of the RDMA data transmission method according to the first aspect and the second aspect.

It should be understood that the content described in the summary part is not intended to identify key or important features of the embodiments of the present disclosure, and is not used to limit the scope of the present disclosure. Other features of the present disclosure will be easily understood through the following description.

### BRIEF DESCRIPTION OF THE DRAWINGS

Through detailed descriptions of non-limiting embodiments given with reference to the following accompanying drawings, other features, objectives and advantages of the present disclosure will be more apparent:
Fig. 1 illustrates an exemplary system architecture in which implementations of the present disclosure may be applied;
FIG. 2 is a block diagram of an RDMA data transmission network system architecture provided according to an implementation of the present disclosure;
FIG. 3 is a flowchart of an RDMA data transmission method provided according to an implementation of the present disclosure;
FIG. 4 is a block diagram of another RDMA data transmission network system architecture provided according to an implementation of the present disclosure;
FIG. 5 is a flowchart of another RDMA data transmission method provided according to an implementation of the present disclosure;
FIG. 6 is a block diagram of another RDMA data transmission network system architecture provided according to an implementation of the present disclosure; and
Fig. 7 is a schematic structural diagram of an electronic device adapted to implement the RDMA data transmission method and provided according to an implementation of the present disclosure.

### DETAILED DESCRIPTION OF EMBODIMENTS

Exemplary embodiments of the present disclosure are described below in combination with the accompanying drawings, and various details of the embodiments of the present disclosure are included in the description to facilitate understanding, and should be considered as exemplary only. Accordingly, it should be recognized by one of ordinary skill in the art that various changes and modifications may be made to the embodiments described herein without departing from the scope and spirit of the present disclosure. Also, for clarity and conciseness, descriptions for well-known functions and structures are omitted in the following description. It should be noted that the embodiments in the present disclosure and the features in the embodiments may be combined with each other on a non-conflict basis.

In the technical solution of the present disclosure, the acquisition, storage, use, processing, transmission, provision, disclosure, etc. of the personal information of a user all comply with the provisions of the relevant laws and regulations, and do not violate public order and good customs.

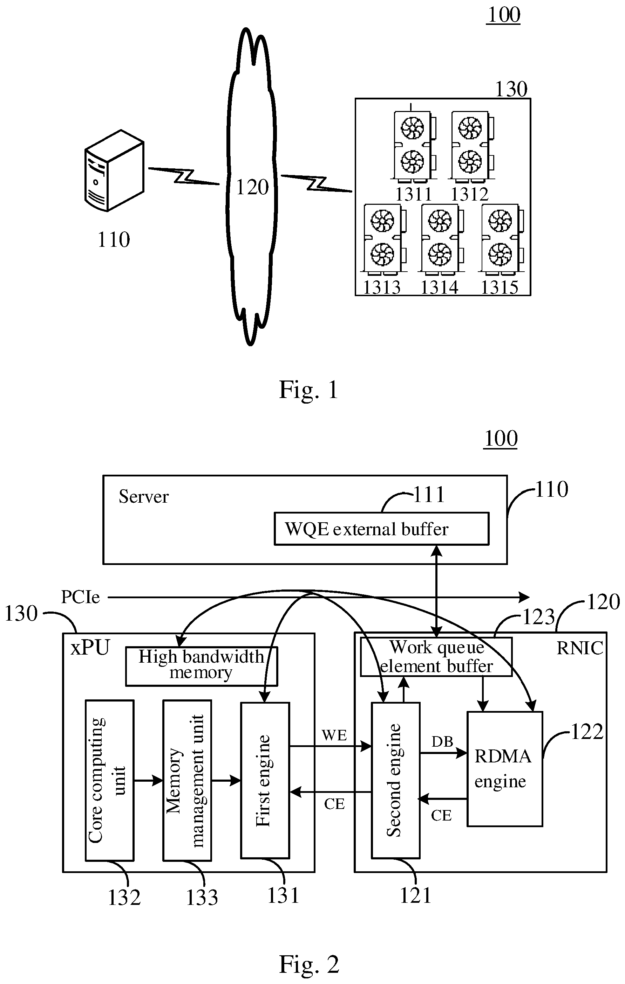

Fig. 1 illustrates an exemplary system architecture 100 in which implementations of an RDMA data transmission method, network device, network system, an electronic device and a computer readable storage medium according to implementations of the present disclosure may be applied.

As shown in Fig. 1, the system architecture 100 may include a server 110, an RNIC 120 and an xPU 130. Here, the server 110 may include a CPU (central processing unit), a host memory, and the like, and may provide various services through various built-in applications. For example, the server 110 may provide an operating environment and resource management for the xPU 130, allocate a memory to the xPU 130, and manage the communication of the xPU 130 with the RNIC (remote direct memory access network interface controller) 120.

In implementations of the present disclosure, "x" in the xPU (x processing unit, which may be referred to as a generic processing unit) is a wildcard, and xPU may be considered as a generic term for various types of processing units. For example, the xPU 130 may include at least one of a CPU, a GPU (graphics processing unit), a TPU (tensor processing unit), an NPU (neural processing unit), a DPU (data processing unit), a VPU (vision processing unit), a QPU (quantum processing unit), and an APU (accelerated processing unit). In addition, the xPU 130 is typically embodied as hardware, and may alternatively be embodied as software or a product of running of software in a special scenario (e.g., a simulation scenario), which will not be specifically limited in the present disclosure.

In addition, the system architecture 100 may include a plurality of xPUs, for example, a first xPU 1311, a second xPU 1312, a third xPU 1313, a fourth xPU 1314, a fifth xPU 1315, etc. that exist in the form of a video card. It should be noted that, in FIG. 1, the form of the RNIC 120 is simplified and only a small number of xPUs 130 are shown as an example. However, it is possible for those skilled in the art to set the numbers, types and connection relationships of the servers 110, the RNICs 120 and the xPUs 130 in the system architecture 100 according to actual requirements, which is not limited in the present disclosure.

The RNIC 120 may be used to provide a communication between the server 110 and the xPU 130. The RNIC 120 may include various types of connections, and the hardware configuration, the interface type and the employed protocol support of the RNIC 120 are not limited in the present disclosure.

In addition, a user may use a terminal device to interact with the server 110 through, for example, the RNIC 120, to receive or send a message, etc. On the server 110, the xPU 130 and the terminal device, various applications (e.g., a training task issuing application, a training strategy preference application, and an instant messaging application) for implementing the information communication therebetween may be installed.

The terminal device and the server 110 may be hardware or software. When being the hardware, the terminal device may be various electronic devices having a display screen, the electronic devices including, but not limited to, a smartphone, a tablet computer, a laptop portable computer, a desktop computer, and the like. When being the software, the terminal device may be installed in the above electronic devices. The terminal device may be implemented as a plurality of pieces of software or a plurality of software modules, or may be implemented as a single piece of software or a single software module, which will not be specifically limited here. When being the hardware, the server 110 may be implemented as a distributed server cluster composed of a plurality of servers, or may be implemented as a single server. When being the software, the server 110 may be implemented as a plurality of pieces of software or a plurality of software modules, or may be implemented as a single piece of software or a single software module, which will not be specifically limited here. The graphics processing unit constituting the xPU 130 is typically embodied as hardware, and clearly, may alternatively be embodied as software or a product of running of software in a special scenario (e.g., a simulation scenario), which will not be specifically limited in the present disclosure.

The server 110 may provide various kinds of services through a variety of built-in applications. For example, the server 110 may include at least one of a file server, a database server, a mail server, a Web server, an application server, a game server, an IaaS (Infrastructure as a Service), a PaaS (Platform as a Service), an SaaS (Software as a Service) and an AI training server. Here, the file server may centrally store and share files (e.g., an internal Enterprise document library). The database server may run a database management system such as MySQL and PostgreSQL. The mail server may process the sending, receiving and storage of mails. The Web server may host websites and Web applications (e.g., Apache and Nginx). The application server may run middleware. The game server may process the real-time interaction logic of a multiplayer online game. The IaaS may provide a virtual machine, and storage and network resources. The PaaS may provide development platforms and tools. The SaaS may deliver software via the network. The AI training server may be equipped with a GPU/TPU to accelerate the training of a deep learning model, etc.

FIG. 2 is a block diagram of an RDMA data transmission network system architecture 100 provided according to an implementation of the present disclosure.

As shown in FIGS. 1 and 2, the system architecture 100 may include a network device. Here, the network device may include an RNIC 120 and an xPU 130. The xPU 130 may include a first engine 131, and the RNIC 120 may include a second engine 121 in communication with the first engine 131, an RDMA engine 122 in communication with the second engine 121, and a WQE Buffer (work queue element buffer) 123.

In addition, the xPU 130 may further include a core computing unit 132 and a memory management unit 133. Here, the types of the core computing units 132 and the memory management units 133 in different types of xPUs 130 may be different. For example, when the xPU 130 includes a GPU, the core computing unit 132 thereof may include an SM (streaming multiprocessor). When the xPU 130 includes a CPU, the core computing unit 132 thereof may include an arithmetic logic unit (ALU), a control unit (CU), and the like.

In addition, when the xPU 130 executes a program, the core computing unit 132 generates a virtual address, and the memory management unit 133 may be responsible for converting the virtual address into a physical address. Alternatively, when the xPU 130 includes a GPU or CPU, the memory management unit 133 thereof may include an MMU (Memory Management Unit).

The RDMA engine 122 in the RNIC 120 may perform various kinds of data processing, and the data processing may include data transmitting, memory accessing, queue managing, and the like.

It should be appreciated that the numbers of the servers, the networks, the network devices, etc. in FIGS. 1 and 2 are merely illustrative. Any number of servers, networks, and network devices may be provided based on actual requirements.

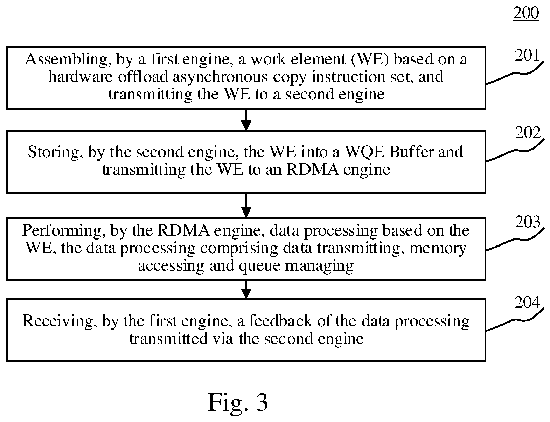

FIG. 3 is a flowchart of an RDMA data transmission method provided according to an implementation of the present disclosure. Here, referring to FIG. 3, the flow 200 includes the following steps.

Step 201, assembling, by a first engine, a work element (WE) based on a hardware offload asynchronous copy instruction set, and transmitting the WE to a second engine.

This step is intended to cause a communication protocol including a hardware offload instruction set to be triggered by a hardware engine (the first engine). Here, the hardware engine may be directly integrated inside an xPU, and may assemble the WE (work element) by itself, and may directly output the assembled WE to the second engine positioned in an RNIC through, for example, PCIe BAR spatial mapping. Accordingly, it may reduce the dependence of the transmission of RDMA data on CPU performance or GPU performance. In addition, it may reduce the number of data deliveries during the transmission of RDMA data, and reduce the data delay during the above transmission.

Particularly, the hardware offload asynchronous copy instruction set may include multi-level synchronous control data transmission instructions. Here, the multi-level synchronous control data transmission instructions may include a thread-level synchronous control data transmission instruction, a thread group-level synchronous control data transmission instruction, a storage block-level synchronous control data transmission instruction, and a global-level synchronous control data transmission instruction.

For example, the hardware offload asynchronous copy instruction set may include:
ibcp.async(dst.addr, src.addr, length);
ibcp.async.wait_thread;
ibcp.async.wait_wrap;
ibcp.async.wait_block; and
ibcp.async.wait_all.

Here, ibcp.async(dst.addr, src.addr, length) is an instruction for initiating an asynchronous data transmission, which is used to initiate an asynchronous data transmission (having a length of "length") from the source address "src.addr" to the destination address "dst.addr"; ibcp.async.wait_thread is a thread-level wait synchronization instruction; ibcp.async.wait_wrap is a thread group-level wait synchronization instruction; ibcp.async.wait_block is a storage block-level wait synchronization instruction; and ibcp.async.wait_all is a global-level wait synchronization instruction.

Taking ibcp.async (dst.addr, src.addr, length) as an example, an asynchronous one-sided RDMA data transmission is started, which may write data from, for example, a local xPU memory (src.addr) directly to the memory (dst.addr) of a remote device without waiting for the completion of the transmission. This instruction may be executed by a dedicated hardware engine, which avoids occupying the resources of the xPU.

Taking ibcp.async.wait_thread as an example, the completion of all RDMA data transmission operations initiated through ibcp.async(dst.addr, src.addr, length) within a current xPU thread is waited for, and the synchronization granularity reaches a thread level. Accordingly, after a plurality of RDMA data transmissions are initiated within the same thread, it can be ensured that a subsequent operation is performed after these transmissions are completed.

Taking ibcp.async.wait_wrap as an example, the completion of all RDMA data transmission operations initiated through ibcp.async(dst.addr, src.addr, length) within a current xPU thread group is waited for, and the synchronization granularity reaches a thread group level. Accordingly, after a plurality of RDMA data transmissions are initiated within the same thread group, it can be ensured that a subsequent operation is performed after these transmissions are completed.

Taking ibcp.async.wait_block as an example, the completion of all RDMA data transmission operations initiated through ibcp.async(dst.addr, src.addr, length) within a current xPU storage block is waited for, and the synchronization granularity reaches a storage block level. Accordingly, after a plurality of RDMA data transmissions are initiated within the same storage block, it can be ensured that a subsequent operation is performed after these transmissions are completed.

Taking ibcp.async.wait_all as an example, the completion of all preceding RDMA data transmission operations initiated through ibcp.async(dst.addr, src.addr, length) within the xPU is waited for, and the synchronization granularity reaches a global level. Accordingly, after all RDMA data transmissions are initiated, it can be ensured that a subsequent operation is performed after all the transmissions are completed.

Accordingly, in some implementations of the present disclosure, an RDMA data transmission task is directly offloaded to the dedicated hardware engine through the hardware offload asynchronous copy instruction set including the multi-level synchronous control data transmission instructions, thereby releasing the computing resources of the xPU completely. The xPU performs returning immediately after initiating the RDMA data transmission, and thus, the xPU may continue to perform a computing task, and may perform an on-demand synchronization through the multi-level synchronous control data transmission instructions to maximize the utilization of computing resources. In addition, the synchronization of multiple levels such as a thread level, a thread group level, a storage block level and a global level is provided, and accordingly, the scheme may adapt to different scenario requirements.

Alternatively, in some implementations of the present disclosure, the assembling, by a first engine, a work element (WE) based on a hardware offload asynchronous copy instruction set may include: receiving an RDMA operation request; assembling the RDMA operation request into the WE based on the hardware offload asynchronous copy instruction set; and writing the WE into a second register. Here, the second register is positioned in the RNIC and communicates with the second engine.

Specifically, the first engine may receive the RDMA operation request (such as an RDMA Copy Async message) issued by any xPU in the system architecture via an NOC (network on chip). The RDMA operation request is assembled into the WE based on the hardware offload asynchronous copy instruction set. The NOC is a communication architecture inside an integrated circuit for connecting a plurality of components (e.g., a processor, and a memory) in a chip, which can realize the efficient data transmission and task scheduling.

The WE may include at least one of: remote information (Remote info), local information (Local info), an operation code (Opcode), a QPN (queue pair number), and a tag (TAG). Here, the TAG is used to mark the thread identifier (ID) of the RDMA operation request or the block ID of a source.

For example, the Remote info may be represented as (Remote VA, Rkey); and the Local info may be represented as (local VA, lkey, length). Here, Remote VA refers to the virtual address of a destination memory on a remote device, and Rkey refers to a remote memory access key; local VA refers to the virtual address of a memory on a local device; lkey refers to a local memory access key; and length refers to the length of transmitted data in units of bytes. The information of the WE together constitutes the basic parameters of the RDMA data transmission operation, which can ensure the efficient and secure execution of the RDMA data transmission.

Alternatively, the mode in which the WE is written into the second register may include a device-to-device PCIe P2P mode. The PCIe P2P mode (Peer to Peer, peer-to-peer communication) refers to that two devices or components communicate with each other directly, without going through a processor or memory for data transfer. This transmission mode significantly improves the processing speed of the RDMA data transmission task and the overall performance of the system: for example, the PCIe P2P mode refers to a hardware-level direct communication, through which the processor and the memory are bypassed; realizing the optimization for the asynchronous operation, after the WE is written into the second register, a hardware engine (the second engine) in communication with the second register may automatically process a task (e.g., store the WE into the WQE Buffer) without waiting for a software instruction; in addition, a direct hardware path may reduce the delay of data transmission.

Step 202, storing, by the second engine, the WE into a WQE Buffer and transmitting the WE to an RDMA engine.

Based on step 201, this step is intended to process a DWQE at a hardware speed using a hardware engine (the second engine) and to release the main processing unit resources of the CPU and the RNIC. On the basis that the delay of a single operation is reduced and the throughput of the network device is improved, the RDMA data transmission task is directly offloaded to the dedicated hardware engine through a hardware asynchronous instruction set, thereby realizing the decoupling of the RDMA data transmission task from the CPU/GPU resources. Therefore, an efficient and low-delay RDMA data transmission solution that does not need to depend on the CPU/GPU resources is provided for a data transmission intensive scenario such as an MoE model.

Specifically, an RDMA protocol is a network protocol that allows a computer to directly access a memory of a remote computer, and is commonly used in scenarios such as a high performance computing (HPC), a data center, a storage network, and the like. The RDMA can achieve a high-speed data transmission between hosts without involving the intervention of the kernel of an operating system, and therefore has a very low delay and a high bandwidth. When the RDMA protocol is used, a sending side (i.e., a communication initiating end) directly writes data into the memory of a receiving side (commonly referred to as a communication receiving end) without the intervention of the operating system. This direct memory access reduces the intermediate layer during the transmission of data, thereby improving the efficiency of the transmission of data.

However, in the data transmission intensive scenario such as the MoE model, many experts can be activated for each sample in the model, resulting in the requirement for the transmission of a large number of scattered small data blocks. In an RDMA data transmission process, for each task, it is required to generate a WQE (work queue element), trigger data processing through a DB (doorbell signal), and actively perform a cyclic check on a completion event in a CQ (completion queue) through a thread.

In some embodiments, it may use a CPU thread to encapsulate a to-be-sent task unit (e.g., a network request) into a WQE and submit the WQE to a Send queue for processing. However, in the RDMA data transmission process, the number of QPs is large, or the number of basic units used to manage a Send/Receive queue is large in a technology such as the RDMA. In order to meet the requirement for the transmission of the large number of scattered small data blocks and realize the task of generating the WQE, triggering the DB and checking the CQ thereof, a large number of CPU resources are consumed. Therefore, when the overhead of the data transmission increases exponentially, the system performance becomes a bottleneck of the scale expansion of the model.

In other embodiments, the processing of a multi-QP task may be completed through the multithreaded parallel capability of the GPU. For example, the task of generating the WQE, triggering the DB and checking the CQ is completed through the multithreading of the GPU. This decouples the dependence of the RDMA data transmission task on CPU performance. However, when the overhead of the data transmission increases exponentially, massive GPU SM computing resources will be consumed.

Accordingly, in an implementation of the present disclosure, the first engine is directly integrated inside the xPU, and the communication protocol including the hardware offload instruction set may be triggered by this hardware engine. The second engine is a dedicated preprocessing hardware engine, which is integrated in the RNIC. The second engine can process the DWQE at the hardware speed and release the main processing unit resources of the CPU and the RNIC. Accordingly, the number of data deliveries during the transmission of RDMA data is reduced, and the data delay is reduced. In addition, the RDMA data transmission task is directly offloaded to the dedicated hardware engine through the hardware asynchronous instruction set, thereby realizing the decoupling of the RDMA data transmission task from the CPU/GPU resources. Therefore, the efficient and low-delay RDMA data transmission solution that does not need to depend on the CPU/GPU resources is provided for the data transmission intensive scenario such as the MoE model.

Specifically, in some implementations of the present disclosure, the storing, by the second engine, the WE into a WQE Buffer and transmitting the WE to an RDMA engine may include: analyzing the WE and storing the WE into the WQE Buffer; and transmitting a plurality of WEs stored in the WQE Buffer to a host memory of the network device based on that an occupancy rate of the WQE Buffer is greater than or equal to a preset threshold.

The second engine may receive the WE from, for example, a PCIe bus, and may verify the integrity of the information of the WE after receiving the WE. Whether the received information of the WE is complete and whether there is data lost or corrupted may be checked. For example, whether the length in the information of the WE meets an expectation may be verified, whether the checksum in the information of the WE is correct may be verified, and the like. If the information of the WE is incomplete or there is an error therein, the second engine may choose to discard the WE and record the error information.

In addition, the second engine may further analyze the WE (analyze the respective fields in the WE), to specify the specific requirements of the operation. For example, the second engine may analyze fields such as the Remote info (Remote VA, Rkey), the local Info (local VA, lkey, length), the Opcode, the QPN and the TAG.

After analyzing the WE, the second engine may extract key information in the WE. The key information is extracted from the analyzed fields to provide a basis for subsequent processing and decision-making. For example, an operation type is determined according to the Opcode. Alternatively, the operation type may include a read operation, a write operation, an atomic operation, and the like. Moreover, a queue pair to which the operation belongs is determined according to the QPN.

According to the information obtained after the analysis, the second engine may further allocate a cache space in the WQE Buffer to the WE. The plurality of WEs stored in the WQE Buffer are transmitted to the host memory of the network device based on that the occupancy rate of the WQE Buffer is greater than or equal to the preset threshold. In other words, if an on-chip WQE Buffer is full, a WQE may be pushed to the host memory of the network device (the WQE external buffer 111 of the host memory shown in FIG. 2). Such hierarchical storage can ensure the performance through an on-chip cache (e.g., the WQE Buffer), and provide capacity redundancy through an external memory (e.g., the WQE external buffer 111), to ultimately achieve an efficient and reliable WQE processing production line.

In addition, after analyzing the WE, the second engine may schedule a processing order. For example, the processing order of the WE is determined according to factors such as an operation priority and a queue status. A WE having a high priority is preferentially processed. This hardware arbitration mechanism automatically allocates a task priority, and thus can avoid a queue congestion.

Alternatively, storing, by the second engine, the WE into a WQE Buffer and transmitting the WE to an RDMA engine may further include: generating a doorbell signal (DB), wherein the DB may include at least one of: to-be-processed queue pair information, start addresses of the plurality of WEs, and a number of the plurality of WEs; and transmitting the DB to the RDMA engine, which may trigger the RDMA engine to perform the data processing. Here, the RDMA engine may read the WE from the WQE Buffer or the WQE external buffer in the above host memory.

The generation and transmission of the DB itself is the flag for the start of the task. When the DB is written into a specific memory region (e.g., an appointed position on the on-chip cache or the host memory), after detecting the presence of the DB through hardware logic, the RDMA engine may automatically start the processing process without software or an additional interrupt signal intervention. In addition, the DB may be positioned on a shared region of the on-chip cache or a shared region of the host memory, where the RDM engine may directly access, which avoids the overhead of data copy. After completing the current data processing, the RDM engine can immediately obtain next data processing through the doorbell mechanism of the DB without waiting for an interrupt response.

Step 203, performing, by the RDMA engine, data processing based on the WE, the data processing may comprises data transmitting, memory accessing and queue managing.

This step is intended to describe that the RDMA engine realizes the RDMA data transmission processing with a low delay, a high bandwidth and a low xPU resource occupancy rate by performing the data processing task including the data transmitting, memory accessing and queue managing. The core advantage is that a complex network operation (e.g., transmission control, and memory management) is completely offloaded to hardware, to cause the CPU to focus on the business logic, thereby significantly improving the performance of a distributed system.

Alternatively, the RDMA engine can achieve, through direct memory access technology, a high-speed data transmission between hosts without involving the intervention of the kernel of an operating system, and therefore has a very low delay and a high bandwidth. For example, the sent WE contains a source address and a destination address, through the direct memory access technology, the RDMA engine 122 can directly deliver data from the source address to the sending buffer of the RNIC 120 without copying.

In addition, the RDMA engine may implement the support for many types of transmissions, for example, Send/Receive, and Read/Write. Here, Send/Receive may be understood as bidirectional data transfer between local or remote nodes, and Read/Write may be understood as a direct access to the memory of a remote node. This may eliminate the context switching and interrupt overhead involved by the xPU, reducing the delay of data transmission to a microsecond level.

The RDMA engine may map a virtual address of a remote node to a physical address through a memory window technology, thus supporting a cross-node direct memory access.

In addition, each queue pair (QP) may contain a separate Send Queue (SQ) and a separate Receive Queue (RQ), and accordingly, the RDMA engine supports the concurrent processing of multitasking streams.

Step 204, receiving, by the first engine, a feedback of the data processing transmitted via the second engine.

This step is intended to feed back an RDMA operation request-based data processing completion message to the xPU issuing the RDMA operation request. Alternatively, the first engine may transmit, via an NOC, the feedback of the data processing to the xPU issuing the RDMA operation request. The NOC is the communication architecture inside an integrated circuit, and is used for connecting a plurality of components (e.g., a processor, and a memory) in a chip, which can realize the efficient data transmission and task scheduling.

Specifically, after completing the above data processing, the RDMA engine may generate a Completion Event (CE) message. The second engine receives the CE message and writes the received CE message into a first register. Here, the first register is positioned in the xPU and may communicate with the first engine. Accordingly, the reliability of the RDMA data transmission can be ensured.

Both the first register and the above-mentioned second register may be understood as a portion of a BAR (Base Address Register) register. The first engine, the second engine and the RDMA engine in the system architecture may be positioned in different hardware modules or processing units (e.g., xPUs), and may communicate with each other via the NOC or a shared register (e.g., the BAR register). This avoids that the direct transfer between the first engine, the second engine and the RDMA engine may require a complex hardware connection, which reduces the complexity of design, and ensures that the different hardware modules or processing units operate independently, reducing mutual interference.

In addition, the BAR register is a register reported by a PCIe device (e.g., the RNIC, the xPU, etc.) to the server at an enumeration stage, for declaring the memory space (e.g., a configuration space, an I/O space, a memory mapping space, etc.) required by the device. The server may allocate a physical address to the BAR register. Accordingly, as a portion of a memory-mapped I/O, the BAR register provides a standardized interface through which a data interaction can be completed through simple read and write operations, thereby reducing the difficulty of design and power consumption.

Alternatively, the mode in which the received CE message is written into the first register may include a PCIe P2P mode. This transmission mode significantly improves the processing speed of the RDMA data transmission task and the overall performance of the system: for example, the PCIe P2P mode refers to a hardware-level direct communication, through which the processor and the memory are bypassed; realizing the optimization for the asynchronous operation, after the CE is written into the first register, a hardware engine (the first engine) in communication with the first register may automatically process a task (e.g., analyze the CE) without waiting for a software instruction; in addition, a direct hardware path may reduce the delay of data transmission.

As an option, the CE message may include at least one of: an operation code (Opcode), a queue pair number (QPN) and a tag (TAG). Here, the TAG is used to mark the thread identifier (ID) of the RDMA operation request or the block ID of a source. The information of the CE together constitutes the basic parameters of the RDMA data transmission operation, which can ensure the efficient and secure execution of the RDMA data transmission.

After receiving the CE message, the first engine may generate a task completion message based on the CE message, and transfer the task completion message to the NOC, to transmit, through the NOC, the task completion message to the xPU issuing the RDMA operation request.

Thus, in the RDMA data transmission scheme provided in the implementations of the present disclosure, the first engine is directly integrated inside the xPU, and the communication protocol including the hardware offload instruction set may be triggered by the hardware engine. The second engine is the dedicated preprocessing hardware engine, which is integrated in the RNIC. The second engine can process the DWQE at the hardware speed and release the main processing unit resources of the CPU and the RNIC. Accordingly, the number of data deliveries during the transmission of RDMA data is reduced, and the data delay is reduced. In addition, the RDMA data transmission task is directly offloaded to the dedicated hardware engine through the hardware asynchronous instruction set, thereby realizing the decoupling of the RDMA data transmission task from the CPU/GPU resources. Therefore, the efficient and low-delay RDMA data transmission solution that does not need to depend on the CPU/GPU resources is provided for the data transmission intensive scenario such as the MoE model.

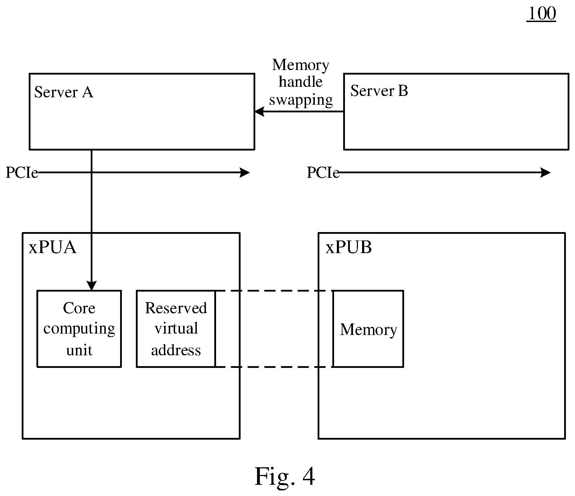

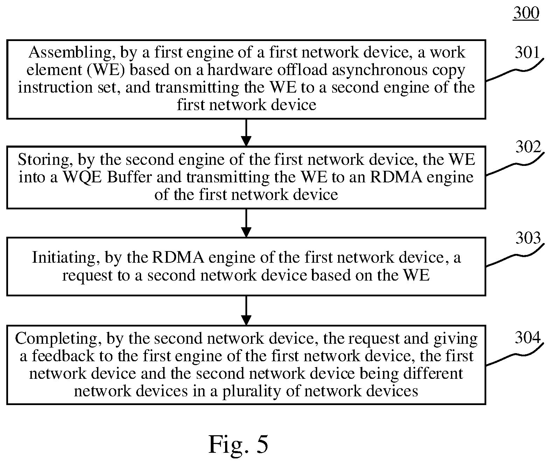

FIG. 4 is a block diagram of another RDMA data transmission network system architecture 100 provided according to an implementation of the present disclosure. FIG. 5 is a flowchart of another RDMA data transmission method provided according to an implementation of the present disclosure.

As shown in FIGS. 2 and 4, the system architecture 100 may include a plurality of network devices, for example, a first network device and a second network device. Here, the first network device may include a server A, an xPUA, and the like, and the second network device may include a server B, an xPUB, and the like.

In addition, it should be noted that the system architecture 100 may include other network devices in addition to the first network device and the second network device. Moreover, in FIG. 4, only a small number of network devices in the system architecture 100 are shown as an example. However, it is possible for those skilled in the art to set the number, type and connection relationship of the network devices in the system architecture 100 according to actual requirements, which is not limited in the present disclosure.

Each network device in the plurality of network devices may include an RNIC and an xPU. The xPU may include a first engine, the RNIC may include a second engine in communication with the first engine, an RDMA engine in communication with the second engine, and a WQE Buffer.

In addition, in each network device in the plurality of network devices, the xPU may further include a core computing unit and a memory management unit. Here, the types of the core computing units and the memory management units in different types of xPUs 130 may be different. For example, when the xPU includes a GPU, the core computing unit may include an SM. When the xPU includes a CPU, the core computing unit may include an arithmetic logic unit, a control unit (CU), and the like.

In addition, when the xPU executes a program, the core computing unit generates a virtual address, and the memory management unit may be responsible for converting the virtual address into a physical address. Alternatively, when the xPU includes a GPU or CPU, the memory management unit 133 thereof may include an MMU.

In each network device in the plurality of network devices, the RDMA engine in the RNIC may perform various kinds of data processing, and the data processing may include data transmitting, memory accessing, queue managing, and the like.

It should be appreciated that the numbers of the servers, the networks, the network devices, etc. in FIG. 4 are merely illustrative. Any number of servers, networks, and network devices may be provided based on actual requirements.

Hereinafter, the RDMA data transmission method will be described in an example in which the first network device accesses the memory of the second network device. It should be noted that since the content involved in the RDMA data transmission method described above may be completely or partially applicable to the RDMA data transmission method described below, the content related or similar thereto will not be repeatedly described. However, it may be appreciated by those skilled in the art that the structure features, method processes, implementation principles and technical effects of the two RDMA data transmission methods are all similar.

Referring to FIG. 5, the flow 300 may include the following steps.

Step 301, assembling, by a first engine of a first network device, a work element (WE) based on a hardware offload asynchronous copy instruction set, and transmitting the WE to a second engine.

This step is intended to cause a communication protocol including a hardware offload instruction set to be triggered by a hardware engine (the first engine). Here, the hardware engine may be directly integrated inside an xPU, and may assemble the WE (work element) by itself, and may directly output the assembled WE to the second engine positioned in an RNIC through, for example, PCIe BAR spatial mapping. Accordingly, it may reduce the dependence of the transmission of RDMA data on CPU performance or GPU performance. In addition, it may reduce the number of data deliveries during the transmission of RDMA data, and reduce the data delay during the above transmission.

In addition, in some implementations of the present disclosure, before step 301 is performed, the RDMA data transmission method may further include: creating an interface corresponding to at least a portion of an RDMA memory region (MR), information of the interface including a unique identifier UniqueID; allocating the MR to a plurality of network devices based on the interface, and establishing MR page tables of the network devices, where memory access credentials mKeys of a plurality of MR page tables are all the UniqueID; implementing, by the plurality of network devices, memory handle swapping; and binding a memory handle obtained after the swapping to the information of the WE, and establishing a virtual address mapping relationship so as to initiate a remote access through the memory handle and the UniqueID.

Particularly, under the support of RNIC hardware, a new RDMA memory region may be provided to create the above interface. For example, the interface is created using an instruction rdma_register_mr_unique(va, length, uniqueID). The UniqueID is an ID used to identify a collective communication, and synchronization of all nodes within a cluster has been completed at the time of initialization of the communication. The nodes described here may be understood as network devices in the system architecture.

The memory region may be understood as an abstraction of a segment of contiguous memory in the RDMA, and the interface allows a user to create the MR by specifying a virtual address (va), a length and a unique identifier (uniqueID). The UniqueID can ensure that in a cluster communication, the respective nodes can identify and synchronize a specific communication task.

Taking the first network device as an example, the xPUA may apply for an HBM (High Bandwidth Memory) through a cudaMalloc function, to create a memory region corresponding to the first network device by using the above interface; and establish an MR page table of the first network device. Memory access credential (mKey) of the MR page table is set as the UniqueID. Here, after the memory region is created for the first network device and the MR page table is established for the first network device, the operation of the RDMA data transmission can be positioned to the memory region of the first network device, and the mKey can be used as a key credential for the memory access.

Similarly, in the second network device and the other network devices, it may also create memory regions and establish MR page tables. Thus, the operation of the RDMA data transmission can also be positioned to the memory region of the second network device, or to the memory region of another network device, and the mKey can be used as a key credential for the memory access. In addition, the plurality of network devices in the system architecture can access each other, and the communication association among the plurality of network devices can be ensured by using the same UniqueID.

Alternatively, an application program of the second network device may assemble a memory handle (xPUB Memory Handle), and interact with the other network devices via a socket or otherwise, to transfer the memory handle to the other network devices. The memory handle may include key information for accessing a remote memory, for example, the virtual address (xPUB va) of the second network device and the length (length).

Similarly, an application program of the first network device may assemble a memory handle (xPUA Memory Handle), and interact with the other network devices (e.g., the second network device) via a socket or otherwise, to transfer the memory handle to the other network devices. The memory handle may include key information for accessing a remote memory, for example, the virtual address (xPUA va) of the second network device and the length (length).

The network device may bind the memory handle obtained after the swapping to the information of the WE, and establish a virtual address mapping relationship, so as to initiate a remote access through the memory handle and the UniqueID.

For example, the network device may bind the memory handle obtained after the swapping to a QP, specifying which QP to complete the access to the network device corresponding to the memory handle. In addition, the QP is edited in the information of the WE. In this way, the WE may specify a communication path of the access to the network device, ensuring that data can be accurately transmitted between the network devices.

Alternatively, taking the first network device as an example, the first network device may locally apply for a local reserved virtual address (e.g., Local Reserved VA) space through a CudaMallocReserved function, and establish mapping information for the local reserved virtual address space to point to the memory handle of another network device (e.g., the xPUB Memory Handle of the second network device). The mapping information may be managed by the MMU of the first network device, or may be managed by means of table entries. In other words, the network device may locally reserve a section of virtual address space as the local reserved virtual address. After the mapping is established, when the network device accesses the local reserved virtual address, the local reserved virtual address can be converted, through the mapping information, into the actual address of a to-be-accessed network device and related communication information, thereby realizing the remote memory access.

On this basis, taking the first network device as an example, the xPU of the first network device may start a kernel program Kernel Launch, which is executed in parallel by a plurality of threads, and may initiate a remote memory access through the hardware offload asynchronous copy instruction set. After the UniqueID is injected into a process context, through the hardware offload asynchronous copy instruction set, the UniqueID may subsequently be transmitted to the MMU and the RNIC for associating the metadata of the remote memory access.

Taking ibcp.async(xPUB Reserved VA, Local VA, length) as an example, the hardware offload asynchronous copy instruction set is transmitted to the MMU, and the MMU may complete an address translation and convert the reserved virtual address xPUB Reserved VA of the second network device into the corresponding virtual address xPUB VA of the second network device and the corresponding QPN information. Then, the MMU transfers the virtual address xPUA VA of the first network device, the xPUB VA, the QPN, the length and the UniqueID information to the first engine.

Alternatively, the hardware offload asynchronous copy instruction set may include ibcp.async(dst.addr, src.addr, length). When Dst.addr is an xPUB Reseverd VA, it indicates that the memory pointed to by the xPUA local va of a local first network device is written into the memory of a remote second network device. When Src.addr is the xPUB Reseverd VA, it indicates that the xPUB Memory of the remote second network device is read to the memory pointed to by the xPUA local va of the local first network device.

The UniqueID is used to identify the ID of a collective communication, and the synchronization of all nodes within a cluster has been completed at the time of initialization of the communication. In other words, at the start point of an RDMA data operation, by starting the kernel program and carrying the UniqueID, it can be ensured that the operation can be accurately associated with a specific communication task, thereby avoiding the confusion between different communication tasks.

The function of the MMU is to convert a virtual address into a physical address or corresponding remote address information. Through an address translation, the actual memory address of the network device can be determined, and related operation information can be transferred to the first engine and the second engine for subsequent preparation for the RDMA data transmission.

The first engine assembles the work element WE according to the above information and based on the hardware offload asynchronous copy instruction set, and transmits the WE to the second engine.

Step 302, storing, by the second engine of the first network device, the WE into a WQE Buffer and transmitting the WE to an RDMA engine of the first network device.

Based on step 301, this step is intended to process a DWQE at a hardware speed by using a hardware engine (the second engine) and to release the main processing unit resources of the CPU and the RNIC. On the basis that the delay of a single operation is reduced and the throughput of the network device is improved, an RDMA data transmission task is directly offloaded to a dedicated hardware engine through a hardware asynchronous instruction set, thereby realizing the decoupling of the RDMA data transmission task from the CPU/GPU resources. Therefore, an efficient and low-delay RDMA data transmission solution that does not need to depend on the CPU/GPU resources is provided for a data transmission intensive scenario such as an MoE model.

Step 303, initiating, by the RDMA engine of the first network device, a request to a second network device based on the WE.

This step is intended to describe that the RDMA engine realizes the RDMA data transmission processing with a low delay, a high bandwidth and a low xPU resource occupancy rate by performing the data processing task including data transmitting, memory accessing and queue managing. The core advantage is that a complex network operation (e.g., a transmission control, and a memory management) is completely offloaded to hardware, to cause the CPU to focus on the business logic, thereby significantly improving the performance of a distributed system.

Alternatively, in some implementations of the present disclosure, the RDMA engine of the first network device may acquire the QPC (queue pair context) corresponding to the queue pair number (QPN) of the WE based on the WE, and determine an operation type according to the QPC. The RDMA engine of the first network device may further acquire the memory handle of the second network device and the UniqueID based on the WE. The RDMA of the first network device completes a packet encapsulation based on the WE, and sends the request to the second network device.

Step 304, completing, by the second network device, the request and giving a feedback to the first engine of the first network device.

This step is intended to feed back an RDMA operation request-based data processing completion message to the xPU issuing the RDMA operation request. Alternatively, the first engine may transmit, via an NOC, the feedback of the data processing to the xPU issuing the RDMA operation request. The NOC is the communication architecture inside an integrated circuit, and is used for connecting a plurality of components (e.g., a processor, and a memory, etc.) in a chip, which can realize the efficient data transmission and task scheduling.

Thus, in the RDMA data transmission scheme provided in the implementations of the present disclosure, the first engine is directly integrated inside the xPU, and the communication protocol including the hardware offload instruction set may be triggered by this hardware engine. The second engine is a dedicated preprocessing hardware engine, which is integrated in the RNIC. The second engine can process the DWQE at the hardware speed and release the main processing unit resources of the CPU and the RNIC. Accordingly, the number of data deliveries during the transmission of RDMA data is reduced, and the data delay is reduced. In addition, the RDMA data transmission task is directly offloaded to the dedicated hardware engine through the hardware asynchronous instruction set, thereby realizing the decoupling of the RDMA data transmission task from the CPU/GPU resources. Therefore, the efficient and low-delay RDMA data transmission solution that does not need to depend on the CPU/GPU resources is provided for the data transmission intensive scenario such as the MoE model.

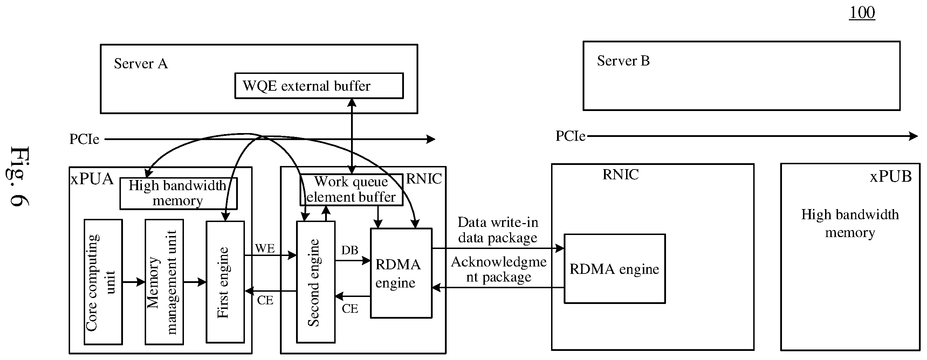

FIG. 6 is a block diagram of a system architecture 100 of another RDMA data transmission network provided according to an implementation of the present disclosure.

In combination with FIGS. 5 and 6, an RDMA data transmission method will be described below in an example in which an RDMA data transmission task is a write operation. Specifically, a first network device may initiate a request such as an ibcp.async write operation request, to write data from the local memory of the first network device to the remote memory of a second network device. It should be noted that since the content involved in the RDMA data transmission method described above may be completely or partially applicable to the RDMA data transmission method described below, the content related or similar thereto will not be repeatedly described. However, it may be appreciated by those skilled in the art that the structure features, method processes, implementation principles and technical effects of the RDMA data transmission methods described herein are all similar.

Referring to FIG. 5, the flow 300 may include the following steps.

Step 301, assembling, by a first engine of a first network device, a work element (WE) based on a hardware offload asynchronous copy instruction set, and transmitting the WE to a second engine.

This step is intended to cause a communication protocol including a hardware offload instruction set to be triggered by a hardware engine (the first engine). Here, the hardware engine may be directly integrated inside an xPU, and may assemble the WE (work element) by itself, and may directly output the assembled WE to the second engine positioned in an RNIC through, for example, PCIe BAR spatial mapping. Accordingly, it may reduce the dependence of the transmission of RDMA data on CPU performance or GPU performance. In addition, it may reduce the number of data deliveries during the transmission of RDMA data, and reduce the data delay during the above transmission.

In addition, in some implementations of the present disclosure, before step 301 is performed, the RDMA data transmission method may further include: creating an interface corresponding to at least a portion of an RDMA memory region (MR), information of the interface including a unique identifier QPC; allocating the MR to a plurality of network devices based on the interface, and establishing MR page tables of the network devices, where memory access credentials mKeys of a plurality of MR page tables are all a UniqueID; implementing, by the plurality of network devices, memory handle swapping; and binding a memory handle obtained after the swapping to information of the WE, and establishing a virtual address mapping relationship so as to initiate a remote access through the memory handle and the UniqueID.

In the process of performing step 301, the xPU of the first network device may start a kernel program Kernel Launch, which is executed in parallel by a plurality of threads, and may initiate a remote memory access through the hardware offload asynchronous copy instruction set. After the UniqueID is injected into a process context, through the hardware offload asynchronous copy instruction set, the UniqueID may subsequently be transmitted to an MMU and the RNIC for associating the metadata of the remote memory access.

The UniqueID is used to identify the ID of a collective communication, and the synchronization of all nodes within a cluster has been completed at the time of initialization of the communication. In other words, at the start point of an RDMA data operation, by starting the kernel program and carrying the UniqueID, it can be ensured that the operation can be accurately associated with a specific communication task, thereby avoiding the confusion between different communication tasks.

The function of the MMU is to convert a virtual address into a physical address or corresponding remote address information. Through an address translation, the actual memory address of the network device can be determined, and related operation information can be transferred to the first engine and the second engine for subsequent preparation for the RDMA data transmission.

Taking ibcp.async(xPUB Reserved VA, Local VA, length) as an example, the hardware offload asynchronous copy instruction set is transmitted to the MMU, and the MMU may complete the address translation and convert the reserved virtual address xPUB Reserved VA of the second network device into the corresponding virtual address xPUB VA of the second network device and the corresponding QPN information. Then, the MMU transfers the virtual address xPUA VA of the first network device, the xPUB VA, the QPN, the length and the UniqueID information to the first engine.

The first engine assembles the work element WE according to the above information and based on the hardware offload asynchronous copy instruction set, and transmits the WE to the second engine.

Step 302, storing, by a second engine of the first network device, the WE into a WQE Buffer and transmitting the WE to an RDMA engine of the first network device.

Based on step 301, this step is intended to process a DWQE at a hardware speed by using a hardware engine (the second engine) and to release the main processing unit resources of the CPU and the RNIC. On the basis that the delay of a single operation is reduced and the throughput of the network device is improved, an RDMA data transmission task is directly offloaded to a dedicated hardware engine through a hardware asynchronous instruction set, thereby realizing the decoupling of the RDMA data transmission task from the CPU/GPU resources. Therefore, an efficient and low-delay RDMA data transmission solution that does not need to depend on the CPU/GPU resources is provided for a data transmission intensive scenario such as an MoE model.

Step 303, initiating, by the RDMA engine of the first network device, a request to a second network device based on the WE.

This step is intended to describe that the RDMA engine realizes the RDMA data transmission processing with a low delay, a high bandwidth and a low xPU resource occupancy rate by performing the data processing task including data transmitting, memory accessing and queue managing. The core advantage is that a complex network operation (e.g., a transmission control, and a memory management) is completely offloaded to hardware, to cause the CPU to focus on the business logic, thereby significantly improving the performance of a distributed system.

Specifically, the RDMA engine of the first network device may acquire the corresponding QPC based on a QPN, initiate an RDMA Write operation, complete the encapsulation of an RDMA Write Request packet according to the hardware offload asynchronous copy instruction set and the WE, and send the RDMA Write Request packet to a remote network device (e.g., the second network device). For example, the data in the high-bandwidth memory of the second network device may be acquired according to the xPUB va, the UniqueID (serving as an mKey) and the length information.

Step 304, completing, by the second network device, the request and giving a feedback to the first engine of the first network device.

This step is intended to feed back an RDMA operation request-based data processing completion message to the xPU issuing the RDMA operation request. Alternatively, the first engine may transmit, via an NOC, the feedback of the data processing to the xPU issuing the RDMA operation request. The NOC is the communication architecture inside an integrated circuit, and is used for connecting a plurality of components (e.g., a processor, and a memory, etc.) in a chip, which can realize the efficient data transmission and task scheduling.

For example, after receiving the above request packet (e.g., a data write-in data package), the RDMA engine of the second network device may write the payload data in the request packet into the memory of the second network device according to a remote endpoint transmission header, the UniqueID and the length information. Here, the remote endpoint transmission header may include a virtual address (xPUB VA, xPUB Virtual Address) of the second network device. Through the hardware offload asynchronous copy instruction set and the information of the WE, the second network device can be precisely positioned, and the xPU of the second network device is bypassed, which reduces the interference and overhead of the xPU, thereby significantly improving the efficiency of the transmission of RDMA data and preventing the xPU from becoming a bottleneck of the data transmission.

The RDMA engine of the second network device may further return an ACK (acknowledgment package) to the RDMA engine of the first network device, thereby informing the first network device that the RDMA write request packet sent by the first network device has been successfully received and processed. Accordingly, the reliability of the transmission of RDMA data can be ensured.

After receiving the ACK, the RDMA engine of the first network device may generate a CE message according to a QP and a WQE, and transmit the CE message to the second engine. The second engine may assemble the received CE message, for example, to make the format and content of the message more normative and uniform. Then, the second engine transfers the CE message to the first engine in a P2P mode. By generating and transferring the CE message, the RDMA engine of the first network device is capable of informing the hardware engine in time that the operation has been completed, which enables the hardware engine to perform subsequent processing (e.g., updating status information, releasing resources, or triggering a new task) in time. In addition, the P2P mode avoids the delay and bandwidth contention problems caused by the message transmission over an intermediate node or a shared bus. In the P2P mode, the CE message can be quickly transferred from the second engine to the first engine, improving the response speed and overall performance of the network device.

Thus, in the RDMA data transmission scheme provided in the implementations of the present disclosure, the first engine is directly integrated inside the xPU, and the communication protocol including the hardware offload instruction set may be triggered by the hardware engine. The second engine is the dedicated preprocessing hardware engine, which is integrated in the RNIC. The second engine can process the DWQE at the hardware speed and release the main processing unit resources of the CPU and the RNIC. Accordingly, the number of data deliveries during the transmission of RDMA data is reduced, and the data delay is reduced. In addition, the RDMA data transmission task is directly offloaded to the dedicated hardware engine through the hardware asynchronous instruction set, thereby realizing the decoupling of the RDMA data transmission task from the CPU/GPU resources. Therefore, the efficient and low-delay RDMA data transmission solution that does not need to depend on the CPU/GPU resources is provided for the data transmission intensive scenario such as the MoE model.

Referring again to FIG. 2, as an implementation of the above RDMA data transmission method, an implementation of the present disclosure provides an RDMA data transmission network device, and the device may correspond to the method shown in FIG. 3. The network device may be specifically applied to various electronic devices.

As shown in FIG. 2, the RDMA data transmission network device provided by the implementation of the present disclosure may include an RNIC 120 and an xPU 130. The xPU 130 may include a first engine 131, and the RNIC 120 may include a second engine 121 in communication with the first engine 131, an RDMA engine 122 in communication with the second engine 121, and a WQE Buffer 123. The first engine 131 is configured to assemble a work element WE based on a hardware offload asynchronous copy instruction set and transmit the WE to the second engine. The second engine 121 is configured to store the WE into the WQE Buffer 123 and transmit the WE to the RDMA engine 122. The RDMA engine 122 is configured to perform data processing based on the WE and to transmit a feedback of the data processing to the first engine 131 via the second engine 121, the data processing including data transmitting, memory accessing and queue managing.

In addition, the xPU 130 may further include a core computing unit 132 and a memory management unit 133. Here, the types of the core computing units 132 and the memory management units 133 in different types of xPUs 130 may be different. For example, when the xPU 130 includes a GPU, the core computing unit 132 thereof may include an SM (streaming multiprocessor). When the xPU 130 includes a CPU, the core computing unit 132 thereof may include an arithmetic logic unit (ALU), a control unit (CU), and the like.

In addition, when the xPU 130 executes a program, the core computing unit 132 generates a virtual address, and the memory management unit 133 may be responsible for converting the virtual address into a physical address. Alternatively, when the xPU 130 includes a GPU or CPU, the memory management unit 133 thereof may include an MMU (Memory Management Unit).

Alternatively, the xPU 130 may include at least one of a CPU, a GPU, a TPU, an NPU, a DPU, a VPU, a QPU and an APU. In addition, the xPU 130 is typically embodied as hardware, and may alternatively be embodied as software or a product of running of software in a special scenario (e.g., a simulation scenario), which will not be specifically limited in the present disclosure.

Alternatively, the RDMA data transmission network device may include a plurality of xPUs 130. In other words, those skilled in the art may set the numbers, types and connection relationships of the RNICs 120 and the xPUs 130 in the RDMA data transmission network device according to actual requirements, which is not limited in the present disclosure.

In some implementations of the present disclosure, the hardware offload asynchronous copy instruction set may include multi-level synchronous control data transmission instructions. Here, the multi-level synchronous control data transmission instructions may include a thread-level synchronous control data transmission instruction, a thread group-level synchronous control data transmission instruction, a storage block-level synchronous control data transmission instruction, and a global-level synchronous control data transmission instruction. An RDMA data transmission task is offloaded directly to a dedicated hardware engine through the hardware offload asynchronous copy instruction set including the multi-level synchronous control data transmission instructions, thereby releasing the computing resources of the xPU completely. The xPU performs returning immediately after initiating the RDMA data transmission, and thus, the xPU may continue to perform a computing task, and may perform an on-demand synchronization through the multi-level synchronous control data transmission instructions to maximize the utilization of computing resources. In addition, the synchronization of multiple levels such as a thread level, a thread group level, a storage block level and a global level is provided, and accordingly, the scheme may adapt to different scenario requirements.

Alternatively, the first engine 131 may be configured to assemble the work element WE based on the hardware offload asynchronous copy instruction set. For example, the first engine 131 may receive an RDMA operation request; assemble the RDMA operation request into the WE based on the hardware offload asynchronous copy instruction set; and write the WE into a second register. Here, the second register is positioned in the RNIC 120 and communicates with the second engine 121.

The WE may include at least one of: remote information (Remote info), local information (Local info), an operation code (Opcode), a QPN (queue pair number), and a tag (TAG). Here, the TAG is used to mark the thread identifier (ID) of the RDMA operation request or the block ID of a source. The information of the WE together constitutes the basic parameters of the RDMA data transmission operation, which can ensure the efficient and secure execution of the RDMA data transmission.

Alternatively, the first engine 131 may be configured to write the WE into the second register in a device-to-device PCIe P2P mode. The PCIe P2P mode is a hardware-level direct communication, through which the processor and the memory are bypassed. The optimization for the asynchronous operation is realized: after the WE is written into the second register, a hardware engine (the second engine) in communication with the second register may automatically process a task (e.g., store the WE into the WQE Buffer) without waiting for a software instruction. In addition, the direct hardware path may reduce the data transmission delay.

In some implementations of the present disclosure, the second engine 121 may be configured to analyze the WE and store the WE into the WQE Buffer 123; transmit a plurality of WEs stored in the WQE Buffer 123 to the host memory of the network device based on that an occupancy rate of the WQE Buffer 123 is greater than or equal to a preset threshold.

Specifically, the second engine 121 may receive the WE from, for example, a PCIe bus, and may verify the integrity of the information of the WE after receiving the WE. The second engine 121 may check whether the received information of the WE is complete and whether there is data lost or corrupted. For example, the second engine 121 may verify whether the length in the information of the WE meets an expectation, whether the checksum in the information of the WE is correct, and the like. If the information of the WE is incomplete or there is an error therein, the second engine 121 may choose to discard the WE and record the error information. In addition, the second engine 121 may further analyze the WE, analyze the respective fields in the WE, to specify the specific requirements of the operation. According to the information obtained after the analysis, the second engine 121 may further allocate a cache space in the WQE Buffer 123 to the WE. If an on-chip WQE Buffer 123 is full, a WQE may be pushed to the host memory of the network device. Such hierarchical storage can ensure the performance through an on-chip cache (e.g., the WQE Buffer 123), and provide capacity redundancy through an external memory, to ultimately achieve an efficient and reliable WQE processing production line.

Alternatively, after analyzing the WE, the second engine 121 may further schedule a processing order. For example, the processing order of the WE is determined according to factors such as an operation priority and a queue status. A WE having a high priority is preferentially processed. This hardware arbitration mechanism automatically allocates a task priority, and thus can avoid a queue congestion.

In addition, the second engine 121 may further generate a doorbell signal (DB), and the DB may include at least one of: to-be-processed queue pair information, start addresses of the plurality of WEs, and a number of the plurality of WEs. The second engine 121 may transmit the DB to the RDMA engine, which may trigger the RDMA engine 122 to perform the data processing. Here, the RDMA engine 122 may read the WE from the WQE Buffer 123 or the WQE external buffer in the above host memory.

The generation and transmission of the DB itself is the flag for the start of the task. When the DB is written into a specific memory region (e.g., an appointed position on the on-chip cache or the host memory), after detecting the presence of the DB through hardware logic, the RDMA engine 122 may automatically start the processing process without software or an additional interrupt signal intervention. In addition, the DB may be positioned on a shared region of the on-chip cache or a shared region of the host memory, where the RDM engine 122 may directly access, which avoids the overhead of data copy. After completing the current data processing, the RDM engine 122 can immediately obtain next data processing through the doorbell mechanism of the DB without waiting for an interrupt response.

Alternatively, the RDMA engine 122 can achieve, through direct memory access technology, a high-speed data transmission between hosts without involving the intervention of the kernel of an operating system, and therefore has a very low delay and a high bandwidth. For example, the sent WE contains a source address and a destination address, through the direct memory access technology, the RDMA engine 122 can directly deliver data from the source address to the sending buffer of the RNIC 120 without copying.

In addition, the RDMA engine 122 may implement the support for many types of transmissions, for example, Send/Receive, and Read/Write. Here, Send/Receive may be understood as bidirectional data transfer between local or remote nodes, and Read/Write may be understood as a direct access to the memory of a remote node. This may eliminate the context switching and interrupt overhead involved by the xPU, reducing the delay of data transmission to a microsecond level. The RDMA engine may map a virtual address of a remote node to a physical address through a memory window technology, thus supporting a cross-node direct memory access. In addition, each QP may contain a separate Send Queue and a separate Receive Queue, and accordingly, the RDMA engine 122 supports the concurrent processing of multitasking streams.

After completing the above data processing, the RDMA engine 122 may generate a CE message. The second engine 121 receives the CE message and writes the received CE message into a first register. Here, the first register is positioned in the xPU 130 and may communicate with the first engine 131.

Both the first register and the above-mentioned second register may be understood as a portion of a BAR (Base Address Register) register. The first engine 131, the second engine 121 and the RDMA engine 122 may be positioned in different hardware modules or processing units in the RDMA data transmission network device, and may communicate with each other via the NOC or a shared register (e.g., the BAR register). This avoids that the direct transfer between the first engine 131, the second engine 121 and the RDMA engine 122 may require a complex hardware connection, which reduces the complexity of design. Moreover, it can be ensured that the different hardware modules or processing units operate independently, reducing mutual interference.

In addition, the BAR register is a register reported by a PCIe device (e.g., the RNIC, the xPU, etc.) to the server at an enumeration stage, for declaring the memory space (e.g., a configuration space, an I/O space, a memory mapping space, etc.) required by the device. The server may allocate a physical address to the BAR register. Accordingly, as a portion of a memory-mapped I/O, the BAR register provides a standardized interface through which a data interaction can be completed through simple read and write operations, thereby reducing the difficulty of design and power consumption.

Alternatively, the second engine 121 may write the received CE message into the first register in a PCIe P2P mode. This transmission mode significantly improves the processing speed of the RDMA data transmission task and the overall performance of the system. For example, the PCIe P2P mode refers to a hardware-level direct communication, through which the processor and the memory are bypassed, realizing the optimization for the asynchronous operation. After the CE is written into the first register, a hardware engine (the first engine 131) in communication with the first register may automatically process a task (e.g., analyze the CE) without waiting for a software instruction. In addition, a direct hardware path may reduce the delay of data transmission.

As an option, the CE message may include at least one of: an operation code (Opcode), a queue pair number (QPN) and a tag (TAG). Here, the TAG is used to mark the thread identifier (ID) of the RDMA operation request or the block ID of a source. The information of the CE together constitutes the basic parameters of the RDMA data transmission operation, which can ensure the efficient and secure execution of the RDMA data transmission.

After receiving the CE message, the first engine 131 may generate a task completion message based on the CE message, and transfer the task completion message to the NOC, to transmit, through the NOC, the task completion message to the xPU issuing the RDMA operation request.

Thus, in the RDMA data transmission scheme provided in the implementations of the present disclosure, the first engine is directly integrated inside the xPU, and the communication protocol including the hardware offload instruction set may be triggered by the hardware engine. The second engine is the dedicated preprocessing hardware engine, which is integrated in the RNIC. The second engine can process the DWQE at the hardware speed and release the main processing unit resources of the CPU and the RNIC. Accordingly, the number of data deliveries during the transmission of RDMA data is reduced, and the data delay is reduced. In addition, the RDMA data transmission task is directly offloaded to the dedicated hardware engine through the hardware asynchronous instruction set, thereby realizing the decoupling of the RDMA data transmission task from the CPU/GPU resources. Therefore, the efficient and low-delay RDMA data transmission solution that does not need to depend on the CPU/GPU resources is provided for the data transmission intensive scenario such as the MoE model.

Referring again to FIGS. 1, 4 and 6, as implementations of the above RDMA data transmission method, an implementation of the present disclosure provides an RDMA data transmission network system, and the system architecture 100 may correspond to the method shown in FIG. 5. The network system may be specifically applied to various electronic devices.

The RDMA data transmission network system architecture 100 provided by the implementation of the present disclosure may include a plurality of network devices, for example, a first network device and a second network device. Here, the first network device may include an xPUA, an RNIC, and the like, and the second network device may include a server B, an xPUB, and the like. Each of the xPUA and the xPUB includes a first engine, and the RNIC includes a second engine in communication with the first engine, a work queue element buffer (WQE Buffer), and an RDMA engine in communication with the second engine.

The system architecture 100 may include other network devices in addition to the first network device and the second network device. Moreover, in FIGS. 4 and 6, only a small number of network devices in the system architecture 100 are shown as an example. However, those skilled in the art may set the number, type and connection relationship of the network devices in the system architecture 100 according to actual requirements, which is not limited in the present disclosure.

In addition, in each network device in the plurality of network devices, the xPU may further include a core computing unit and a memory management unit. Here, the types of the core computing units and the memory management units in different types of xPUs 130 may be different. For example, when the xPU includes a GPU, the core computing unit may include an SM. When the xPU includes a CPU, the core computing unit may include an arithmetic logic unit, a control unit, and the like.

In addition, when the xPU executes a program, the core computing unit generates a virtual address, and the memory management unit may be responsible for converting the virtual address into a physical address. Alternatively, when the xPU includes a GPU or CPU, the memory management unit 133 thereof may include an MMU.

In each network device in the plurality of network devices, the RDMA engine in the RNIC may perform various kinds of data processing, and the data processing may include data transmitting, memory accessing, queue managing, and the like.

It should be noted that, since the content involved in the RDMA data transmission method described above may be completely or partially applicable to the RDMA data transmission method described below, the content related or similar thereto will not be repeatedly described. However, it may be understood by those skilled in the art that the structure features, method processes, implementation principles and technical effects of the two RDMA data transmission solutions are all similar.

The first engine of the first network device may be configured to assemble a work element WE based on a hardware offload asynchronous copy instruction set and transmit the WE to the second engine of the first network device. The second engine of the first network device may be configured to store the WE into the WQE Buffer and transmit the WE to the RDMA engine of the first network device. The RDMA engine of the first network device may be configured to initiate a request to the second network device based on the WE. The second network device is configured to complete the request and feedback to the first engine of the first network device. Here, the first network device and the second network device are different network devices in the plurality of network devices in the system architecture 100.

As shown in FIG. 1, the system architecture 100 may further include a server 110. The server 110 may be configured to: create an interface corresponding to at least a portion of an RDMA memory region MR, information of the interface including a unique identifier UniqueID; allocate the MR to the plurality of network devices based on the interface, and establish MR page tables of the network devices, wherein memory access credentials mKeys of a plurality of MR page tables are all the UniqueID; implement, by the plurality of network devices, memory handle swapping; and bind a memory handle obtained after the swapping to information of the WE, and establish a virtual address mapping relationship so as to initiate a remote access through the memory handle and the UniqueID.

The UniqueID is used to identify the ID of a collective communication, and the synchronization of all nodes within a cluster has been completed at the time of initialization of the communication. In other words, at the start point of an RDMA data operation, by starting the kernel program and carrying the UniqueID, it can be ensured that the operation can be accurately associated with a specific communication task, thereby avoiding the confusion between different communication tasks.

Alternatively, the hardware offload asynchronous copy instruction set may include ibcp.async(dst.addr, src.addr, length). When Dst.addr is thexPUB Reseverd VA, it indicates that the memory pointed to by the xPUA local va of a local first network device is written into the memory of a remote second network device. When Src.addr is the xPUB Reseverd VA, it indicates that the xPUB Memory of the remote second network device is read to the memory pointed to by the xPUA local va of the local first network device.

In some implementations of the present disclosure, the RDMA engine of the first network device is configured to acquire the QPC corresponding to the queue pair number QPN of the WE based on the WE, and determine an operation type according to the QPC. The RDMA engine of the first network device is further configured to acquire the memory handle of the second network device and the UniqueID based on the WE. The RDMA engine of the first network device completes a packet encapsulation based on the WE, and sends the request to the second network device.

After receiving the above request packet (e.g., a data write-in data package), the RDMA engine of the second network device may write the payload data in the request packet into the memory of the second network device according to a remote endpoint transmission header, the UniqueID and the length information. Here, the remote endpoint transmission header may include a virtual address (xPUB VA, xPUB Virtual Address) of the second network device. Through the hardware offload asynchronous copy instruction set and the information of the WE, the second network device can be precisely positioned, and the xPU of the second network device is bypassed, which reduces the interference and overhead of the xPU, thereby significantly improving the efficiency of the transmission of RDMA data and preventing the xPU from becoming a bottleneck of the data transmission.

The RDMA engine of the second network device may further return an ACK (acknowledgment package) to the RDMA engine of the first network device, thereby informing the first network device that the RDMA write request packet sent by the first network device has been successfully received and processed. Accordingly, the reliability of the transmission of RDMA data can be ensured.

After receiving the ACK, the RDMA engine of the first network device may generate a CE message according to a QP and a WQE, and transmit the CE message to the second engine. The second engine may assemble the received CE message, for example, to make the format and content of the message more normative and uniform. Then, the second engine transfers the CE message to the first engine in a P2P mode. By generating and transferring the CE message, the RDMA engine of the first network device is capable of informing the hardware engine in time that the operation has been completed, which enables the hardware engine to perform subsequent processing (e.g., updating status information, releasing resources, or triggering a new task) in time. In addition, the P2P mode avoids the delay and bandwidth contention problems caused by the message transmission over an intermediate node or a shared bus. In the P2P mode, the CE message can be quickly transferred from the second engine to the first engine, improving the response speed and overall performance of the network device.

Thus, in the RDMA data transmission scheme provided in the implementations of the present disclosure, the first engine is directly integrated inside the xPU, and the communication protocol including a hardware offload instruction set may be triggered by the hardware engine. The second engine is a dedicated preprocessing hardware engine, which is integrated in the RNIC. The second engine can process a DWQE at a hardware speed and release the main processing unit resources of the CPU and the RNIC. Accordingly, the number of data deliveries during the transmission of RDMA data is reduced, and data delay is reduced. In addition, an RDMA data transmission task is directly offloaded to the dedicated hardware engine through a hardware asynchronous instruction set, thereby realizing the decoupling of the RDMA data transmission task from the CPU/GPU resources. Therefore, an efficient and low-delay RDMA data transmission solution that does not need to depend on the CPU/GPU resources is provided for a data transmission intensive scenario such as an MoE model.

According to an embodiment of the present disclosure, an electronic device is further provided. The electronic device includes at least one processor, and a memory in communication with the at least one processor. Here, the memory stores instructions executable by the at least one processor, and the instructions are executed by the at least one processor, to enable the at least one processor to implement the RDMA data transmission method described in any of the above implementations.

According to an embodiment of the present disclosure, a readable storage medium is further provided. The readable storage medium stores a computer instruction. Here, the computer instruction is used to enable a computer to implement the RDMA data transmission method described in any of the above implementations.

According to an embodiment of the present disclosure, a computer program product is further provided. The computer program, when executed by a processor, can implement the RDMA data transmission method described in any of the above implementations.

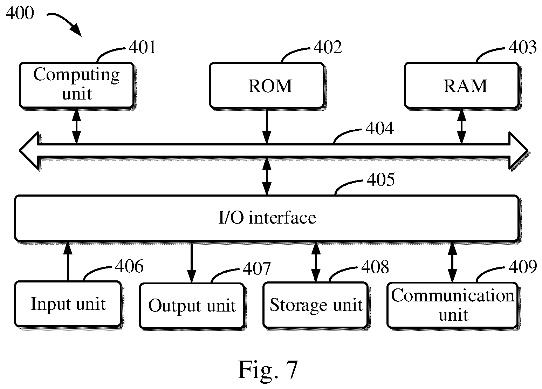

FIG. 7 is a block diagram of an electronic device 400 which may be used for implementing embodiments of the present disclosure. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as personal digital processing, cellular telephones, smart phones, wearable devices, and other similar computing devices. The components shown herein, their connections and relationships, and their functions are by way of example only and are not intended to limit the implementation of the present disclosure as described and/or claimed herein.

As shown in Fig. 7, the device 400 includes a computing unit 401, which may execute various appropriate actions and processes in accordance with a program stored in a read-only memory (ROM) 402 or a program loaded into a random access memory (RAM) 403 from a storage portion 408. The RAM 403 also stores various programs and data required by operations of the system 400. The computing unit 401, the ROM 402 and the RAM 403 are connected to each other through a bus 404. An input/output (I/O) interface 405 is also connected to the bus 404.

A plurality of components of the device 400 are connected to the I/O interface 405: an input unit 406, such as a keyboard, a mouse etc.; an output unit 407, such as display devices of various types, a speaker etc.; a storage unit 408, such as a disk, an optical disk, etc.; and a communication unit 409, such as a network interface card, a modem, a wireless communication transceiver, etc.. The communication unit 409 allows the device 400 to exchange information/data with other devices through a computer network such as the Internet and/or various telecommunications networks.

The computing unit 401 may be various general-purpose and/or dedicated processing components having processing and computing capabilities. Some examples of the computing unit 401 include, but are not limited to, central processing unit (CPU), graphics processing unit (GPU), various dedicated artificial intelligence (AI) computing chips, various computing units running machine learning model algorithms, digital signal processors (DSP), and any appropriate processors, controllers, microcontrollers, etc. The computing unit 401 performs the various methods and processes described above, such as the RDMA data transmission method. For example, in some embodiments, the the RDMA data transmission method may be implemented as a computer software program, which is tangibly included in a machine readable medium, such as the storage unit 408. In some embodiments, part or all of the computer program may be loaded and/or installed on the device 400 via the ROM 402 and/or the communication unit 409. When the computer program is loaded into the RAM 403 and executed by the computing unit 401, one or more steps of the RDMA data transmission method described above may be performed. Alternatively, in other embodiments, the computing unit 401 may be configured to perform the RDMA data transmission method by any other appropriate means (for example, by means of firmware).

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may include: being implemented in one or more computer programs, where the one or more computer programs may be executed and/or interpreted on a programmable system including at least one programmable processor, and the programmable processor may be a specific-purpose or general-purpose programmable processor, which may receive data and instructions from a storage system, at least one input device and at least one output device, and send the data and instructions to the storage system, the at least one input device and the at least one output device.

Program codes used to implement the method of embodiments of the present disclosure may be written in any combination of one or more programming languages. These program codes may be provided to a processor or controller of a general-purpose computer, specific-purpose computer or other programmable data processing apparatus, so that the program codes, when executed by the processor or controller, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the present disclosure, the machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any appropriate combination thereof. A more specific example of the machine-readable storage medium may include an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other. The Server could be a cloud server, also known as cloud computing server or cloud host, which is a host product in the cloud computing service system to solve the defects of difficult management and weak business scalability in the traditional physical host and Virtual Private server (VPS, Virtual Private Server) service. The server may also be classified as distributed system servers, or a server that combines a blockchain.

In the RDMA data transmission scheme provided in implementations of the present disclosure, the first engine is directly integrated inside the xPU, and the communication protocol including a hardware offload instruction set may be triggered by this hardware engine. The second engine is a dedicated preprocessing hardware engine, which is integrated in the RNIC. The second engine is capable of processing a DWQE (device work queue element) at a hardware speed and release the main processing unit resources of the CPU and the RNIC. Accordingly, the number of data deliveries during the transmission of RDMA data is reduced, and the data delay is reduced. In addition, an RDMA data transmission task is directly offloaded to a dedicated hardware engine through a hardware asynchronous instruction set, thereby realizing the decoupling of the RDMA data transmission task from the CPU/GPU resources. Therefore, an efficient and low-delay RDMA data transmission solution that does not need to depend on the CPU/GPU resources is provided for a data transmission intensive scenario such as an MoE model.

It should be appreciated that the steps of reordering, adding or deleting may be executed using the various forms shown above. For example, the steps described in embodiments of the present disclosure may be executed in parallel or sequentially or in a different order, so long as the expected results of the technical schemas provided in embodiments of the present disclosure may be realized, and no limitation is imposed herein.

The above specific implementations are not intended to limit the scope of the present disclosure. It should be appreciated by those skilled in the art that various modifications, combinations, sub-combinations, and substitutions may be made depending on design requirements and other factors. Any modification, equivalent and modification that fall within the spirit and principles of the present disclosure are intended to be included within the scope of the present disclosure.

## Claims

1. An remote direct memory access, RDMA, data transmission method, applied to a network device comprising a processor (130) and an RDMA network interface controller , RNIC, (120) wherein the processor (130) comprises a first engine (131), the RNIC (120) comprises a second engine (121) in communication with the first engine (131), a work queue element, WQE, buffer (123), and an RDMA engine (122) in communication with the second engine (121), and the method comprises:
assembling, by the first engine (131), a work element, WE, based on a hardware offload asynchronous copy instruction set, and transmitting the WE to the second engine (121);
storing, by the second engine (121), the WE into the WQE buffer (123) and transmitting the WE to the RDMA engine (122);
performing, by the RDMA engine (122), data processing based on the WE, the data processing comprising data transmitting, memory accessing and queue managing; and
receiving, by the first engine (131), a feedback of the data processing transmitted via the second engine (121).

2. The method according to claim 1, wherein the hardware offload asynchronous copy instruction set comprises multi-level synchronous control data transmission instructions,
wherein the multi-level synchronous control data transmission instructions comprise a thread-level synchronous control data transmission instruction, a thread group-level synchronous control data transmission instruction, a storage block-level synchronous control data transmission instruction, and a global-level synchronous control data transmission instruction.

3. The method according to claim 1, wherein the processor (130) further comprises a first register in communication with the first engine (131), and the receiving, by the first engine (131), a feedback of the data processing transmitted via the second engine (121) comprises:
generating, by the RDMA engine (122), a completion event, CE, message after the data processing is completed; and
receiving, by the second engine (121), the CE message, and writing the received CE message into the first register,
wherein a mode in which the received CE message is written into the first register comprises a device-to-device PCIe P2P mode, the CE message comprises at least one of an operation code, a queue pair number and a tag, and the tag is used to mark a thread identifier, ID, of an RDMA operation request or a block ID of a source.

4. The method according to claim 3, further comprising:
transmitting, by the first engine (131) and through a network on chip, NOC, the feedback of the data processing to a processor issuing the RDMA operation request.

5. The method according to claim 1, wherein the RNIC (120) further comprises a second register in communication with the second engine (121), and the assembling, by the first engine (131), a work element, WE, based on a hardware offload asynchronous copy instruction set comprises:
receiving an RDMA operation request;
assembling the RDMA operation request into the WE based on the hardware offload asynchronous copy instruction set; and
writing the WE into the second register,
wherein a mode in which the WE is written into the second register comprises a device-to-device PCIe P2P mode, the WE comprises at least one of remote information, local information, an operation code, a queue pair number and a tag, and the tag is used to mark a thread identifier, ID, of the RDMA operation request or a block ID of a source.

6. The method according to claim 1, wherein the storing, by the second engine (121), the WE into the WQE buffer (123) and transmitting the WE to the RDMA engine (122) comprises:
analyzing the WE and storing the WE into the WQE buffer (123); and
transmitting a plurality of WEs stored in the WQE buffer (123) to a host memory of the network device in response to an occupancy rate of the WQE buffer being greater than or equal to a preset threshold.

7. The method according to claim 6, wherein the storing, by the second engine (121), the WE into the WQE buffer (123) and transmitting the WE to the RDMA engine (122) further comprises:
generating a doorbell signal, DB, wherein the DB comprises at least one of: to-be-processed queue pair information, start addresses of the plurality of WEs and a number of the plurality of WEs; and
transmitting the DB to the RDMA engine (122) to trigger the RDMA engine (122) to perform the data processing,
wherein the RDMA engine (122) reads the WE from the WQE buffer (123) or from the host memory.

8. An remote direct memory access, RDMA, data transmission method, applied to a network system comprising a plurality of network devices, wherein each network device comprises a processor (130) and an RDMA network interface controller, RNIC, (120) the processor (130) comprises a first engine (131), the RNIC (120) comprises a second engine (121) in communication with the first engine (131), a work queue element, WQE, buffer (123), and an RDMA engine (122) in communication with the second engine (121), and the method comprises:
assembling, by a first engine (131) of a first network device, a work element, WE, based on a hardware offload asynchronous copy instruction set, and transmitting the WE to a second engine of the first network device;
storing, by the second engine (121) of the first network device, the WE into the WQE buffer (123) and transmitting the WE to an RDMA engine (122) of the first network device;
initiating, by the RDMA engine (122) of the first network device, a request to a second network device based on the WE; and
completing, by the second network device, the request and giving a feedback to the first engine (131) of the first network device,
wherein the first network device and the second network device are different network devices in the plurality of network devices.

9. The method according to claim 8, further comprising:
creating an interface corresponding to at least a portion of an RDMA memory region, MR, information of the interface comprising a unique identifier, UniqueID;
allocating the MR to the plurality of network devices based on the interface, and establishing MR page tables of the network devices, wherein memory access credentials, mKeys, of a plurality of MR page tables are all the UniqueID;
implementing, by the plurality of network devices, memory handle swapping; and
binding a memory handle obtained after the swapping to the information of the WE, and establishing a virtual address mapping relationship so as to initiate a remote access through the memory handle and the UniqueID.

10. The method according to claim 9, wherein the initiating, by the RDMA engine (122) of the first network device, a request to a second network device based on the WE comprises:
acquiring, by the RDMA engine (122) of the first network device, a queue pair context, QPC, corresponding to a queue pair number, QPN, of the WE based on the WE, and determining an operation type according to the QPC;
acquiring, by the RDMA engine (122) of the first network device, the memory handle of the second network device and the UniqueID based on the WE; and
completing, by the RDMA engine (122) of the first network device, a packet encapsulation based on the WE, and sending the request to the second network device.

11. An remote direct memory access, RDMA, data transmission network device, comprising:
a processor (130), comprising a first engine (131); and
an RDMA network interface controller, RNIC, (120) comprising a second engine (121) in communication with the first engine (131), a work queue element, WQE, buffer (123), and an RDMA engine (122) in communication with the second engine (121),
wherein the first engine (131) is configured to assemble a work element, WE, based on a hardware offload asynchronous copy instruction set, and transmit the WE to the second engine (121);
the second engine (121) is configured to store the WE into the WQE buffer (123) and transmit the WE to the RDMA engine (122); and
the RDMA engine (122) is configured to perform data processing based on the WE and transmit a feedback of the data processing to the first engine (131) via the second engine (121), the data processing comprising data transmitting, memory accessing and queue managing.

12. An remote direct memory access, RDMA, data transmission network system, comprising: a plurality of network devices, wherein a network device comprises a processor (130) and an RDMA network interface controller, RNIC, (120) the processor (130) comprises a first engine (131), the RNIC (120) comprises a second engine (121) in communication with the first engine (131), a work queue element, WQE, buffer (123), and an RDMA engine (122) in communication with the second engine (121),
wherein a first engine (131) of a first network device is configured to assemble a work element, WE, based on a hardware offload asynchronous copy instruction set, and transmit the WE to a second engine (121) of the first network device;
the second engine (121) of the first network device is configured to store the WE into the WQE buffer (123) and transmit the WE to an RDMA engine (122) of the first network device;
the RDMA engine (122) of the first network device is configured to initiate a request to a second network device based on the WE; and
the second network device is configured to complete the request and give a feedback to the first engine (131) of the first network device,
wherein the first network device and the second network device are different network devices in the plurality of network devices.

13. An electronic device, comprising:
at least one processor; and
a memory, in communication with the at least one processor,
wherein the memory stores instructions executable by the at least one processor, and the instructions are executed by the at least one processor, to enable the at least one processor to perform the RDMA data transmission method according to any one of claims 1-10.

14. A non-transitory computer readable storage medium, storing a computer instruction, wherein the computer instruction is used to cause a computer to perform the RDMA data transmission method according to any one of claims 1-10.

15. A computer program product, comprising a computer program, wherein the computer program, when executed by a processor, implements steps of the RDMA data transmission method according to any one of claims 1-10.
